# EUROPEAN PATENT SPECIFICATION

(11) **EP 2 846 915 B1**
(45) Date of publication and mention of the grant of the patent: **31.01.2018**
(21) Application number: 13721958.0
(22) Date of filing: 07.05.2013
(51) Int. Cl.: B01L 3/02, B01L 3/00, G01N 35/10

(54) **MICROFLUIDIC DISPENSER, CARTRIDGE AND ANALYSIS SYSTEM FOR ANALYZING A BIOLOGICAL SAMPLE**
MIKROFLUIDISCHER SPENDER, KARTUSCHE UND ANALYSESYSTEM ZUR ANALYSE VON BIOLOGISCHEN PROBEN
DISTRIBUTEUR MICROFLUIDIQUE, CARTOUCHE ET SYSTÈME D'ANALYSE POUR ANALYSER UN ÉCHANTILLON BIOLOGIQUE

(30) Priority: 08.05.2012 EP 12167109
(43) Date of publication of application: 18.03.2015
(73) Proprietor: Roche Diagnostics GmbH, 68305 Mannheim (DE); F. Hoffmann-La Roche AG, 4070 Basel (CH)
(72) Inventor: BÖHM, Christoph, 68519 Viernheim (DE); KLEIN, Timo, 76889 Klingenmünster (DE); KOLTAY, Peter, 79117 Freiburg (DE); LOSLEBEN, Nadine, 68677 München (DE); SPINKE, Jürgen, 64653 Lorsch (DE); STEINERT, Chris, 6005 Luzern (CH)
(74) Representative: Richardt Patentanwälte PartG mbB
(86) International application number: PCT/EP2013/059478
(87) International publication number: WO 2013/167584

(56) References cited:
- EP-A1- 2 374 541
- WO-A1-2006/048643
- US-A- 4 130 224
- US-A- 5 947 167

## Description

The present invention relates to the field of cartridges and analysis systems for analyzing biological samples.

EP 1 959 257 A2 discloses an analyzer that has a reagent pipettor. The reagent pipettor is used for dispensing a reagent into a vessel containing a sample to initiate a chemical reaction.

US Patent 5,947,167 discloses a dispensing assembly with interchangeable cartridge pumps. Other fluid dispensers are disclosed in WO 2005/016534 A1 and WO 2007/122387 A2. W. Streule et al., "PipeJet: A simple disposable dispenser for the nano- and microliter range", JALA, October 2004, pages 300-306 discloses a polymer tube clamped between two jaws. The backend of the tube is connected to a reservoir and serves as a supply channel.

US 5,947,167 A describes a cartridge pump and dispensing assembly for applications where cartridges containing liquid reagents are interchanged often. The cartridge pump comprises a reagent reservoir which directly empties into a metering chamber. A valve is at each end of the metering chamber. The two valves are aligned in the same direction so as to allow unidirectional liquid flow. The metering chamber is made of a compressible material, such as flexible tubing, so that when an external compression is applied to the chamber, the liquid contained therein is forcibly expelled. As the compression is removed, the metering chamber resumes its former shape and draws liquid into the chamber from the reagent reservoir. A dispensing assembly with electromechanical actuators for compression of the metering chamber and a means for sensing the amount of liquid contained within the reagent reservoir are also shown.

EP 2 374 541 A1 refers to a disposable dispensing cartridge comprising: a reservoir adapted to contain a solution to be dispensed; a chamber in fluidic communication with the reservoir through a first unidirectional valve, the chamber comprising an outlet portion and a second connecting portion, the outlet portion comprising a second unidirectional valve allowing passage of the solution out of the chamber; characterized in that the disposable cartridge is connectable via the connecting portion to a pressurizing device, the pressurizing device being adapted to apply a reduced pressure within the chamber, drawing a predetermined volume of solution from the reservoir, through the first unidirectional valve, into the chamber; and to apply a raised pressure within the chamber, drawing the determined volume of solution out of the chamber, through the second unidirectional valve; and in that the connecting portion comprises a check valve being arranged to allow gas, but not the solution, to flow in and/or out of the chamber via the second connecting portion.

WO 2006/048643 A1 describes a liquid dispensing system comprises a cartridge in which liquid to be dispensed is retained and at least one solenoid assembly. The solenoid assembly comprises a coil and an armature, the armature being movably mounted within the cartridge and the coil being separate from the cartridge. Movement of the armature acts to expel liquid from the cartridge.

It is an object of the present invention to provide an improved cartridge and an analysis system.

The present invention provides a cartridge and an analysis system as claimed in the independent claims. Embodiments of the invention are given in the dependent claims.

In accordance with embodiments of the invention a cartridge is provided for dispensing a fluid, such as a reagent. The cartridge comprises a reservoir for the fluid and a dispenser for dispensing the fluid comprising a compressible elastomeric fluid conduit, such as for instance an elastomeric tube. The conduit has a first end and a second end for flowing the fluid from the first end to the second end. A first and a second check valves are distanced in the conduit for forming a fluid chamber. At least the second check valve is a duckbill valve or a rotationally symmetrical valve having a circular fluid outlet. The second check valve is located at the second end of the conduit. The second check valve has sealing lips, such as for instance elastomeric sealing lips. The sealing lips extend beyond the second end of the conduit. The first end is connected to the reservoir for enabling an inflow of the fluid from the reservoir into the fluid chamber through the first check valve. The cartridge has a wall portion. The fluid chamber of the dispenser extends along the wall portion. The cartridge comprises an actor for compressing the fluid chamber for dispensing a portion of the fluid. The actor being arranged to presses the fluid chamber against the wall portion for compressing the fluid chamber is compressed such that fluid is dispensed. This design has the advantage of integrating the counter-bearing into the cartridge.

A "duckbill valve" as understood herein encompasses a valve, manufactured e.g. from rubber or synthetic elastomer, and shaped like the beak of a duck. A duckbill valve may have an outlet slit formed by adjacent sealing lips that may have the form of a straight line. Other forms are also possible for the outlet such as a cross slot or a T-shape. For example, a duckbill valve with a T-shape is known from US Patent 5456284.

The term "microfluidic" as understood herein encompasses fluid volumes in the nanoliter or microliter range, such as between 1 nanoliter and 10 microliter.

The term "actor" as understood herein relates to a mechanical contact element that can be driven to mechanically act upon another element, e.g. the elastomeric fluid conduit, by exercising a mechanical force.

As alternative, the actor is not part of the dispenser but of an external device, such as an analyzer, that may also comprise a drive for driving the actor.

The second check valve has a symmetrical valve body that is symmetrical around a longitudinal axis of symmetry that it extends along the fluid conduit. The circular fluid outlet of the second check valve is centered on the axis of symmetry. The second check valve is made of an elastic material that has an elastic pre-tension to keep the circular fluid outlet normally-closed.

The rotational symmetry of the second check valve and in particular its circular fluid outlet have the advantage that the fluid is dispensed from the second check valve with a quasi-laminar fluid flow profile that prevents the creation of so called 'satellites' when the fluid is dispensed such that the precision with which the fluid is dispensed is further increased and the adhesion of fluid residuals on the dispenser is reduced.

In accordance with embodiments of the invention the elastic material of the second check valve may comprise silicone, a thermoplastic elastomer (TPE) and/or vulcanized rubber. The second check valve having the elastic pre-tension can be produced by injection molding, injection-compression or hot-stamping.

The term 'normally-closed' as understand herein relates to a valve that is operated by means of an actor, such as by exercising a mechanical force onto the compressible elastomeric fluid conduit. The valve is in its closed state if the actor is not energized or if the actor or drive of the actor fails. In other words, unless an opening force is exercised from the actor onto the valve, such as by compressing the elastomeric fluid conduit, the valve remains in its closed position.

Embodiments of the present invention are particularly advantageous as the second check valve has an additional function: it keeps the valve normally-closed and provides evaporation protection to prevent evaporation of the fluid contained in the compressible elastomeric fluid conduit.

Embodiments of the invention are particularly advantageous as the entirety of the fluid that is dispensed from the fluid chamber through the second check valve is dispensed into a receptacle, such as a test tube. Essentially nothing of the dispensed fluid volume remains on the outside of the dispenser. This has the advantage that no decay products of a portion of the dispensed fluid volume that may otherwise adhere to the outside of the dispenser are present. This prevents the dispensed fluid from being contaminated by such decay products which may result from the contact with the dispensed fluid with the ambient air.

Another advantage is that the concentration of a reagent which is dispensed is not changed by remaining fluid volumes of former dispensing steps. Due to evaporation of the solvent of the reagent volumes adhering on the outside of the dispenser, the reagent concentration within this adhering and remaining reagent volume from a former dispensing step increases during time and may influence the overall reagent concentration of the subsequent dispensing steps. This way a potential error is eliminated which enables to further increase the precision with which a desired quantity of a reagent with a defined and reproducible concentration can be dispensed.

Another advantage is that the purity of the fluid is not negatively affected by the dispensing process such that the volume of the dispensed fluid may be decreased, especially if the fluid is a reagent.

This is also due to the fact that the dispenser has no dead volume into which a portion of the dispensed fluid volume is retained in contact with the ambient air. Furthermore, this is because of the surprising effect of the second check valve, i.e. the duckbill valve or the rotationally symmetrical valve, acting as a nozzle. This results in a quasi laminar fluid flow during the fluid dispensing process and a defined cut-off of the fluid flow when the dispensing terminates after the desired fluid volume has been dispensed from the fluid chamber.

The precise and defined cut-off of the fluid dispensing flow is due to the duckbill valve which may have an outlet slit formed by the adjacent sealing lips that preferably has the form of a straight line. This way a well-defined edge is formed by the outlet slit for cutting off the fluid flow at the end of the dispensing process.

This effect is also accomplished using the rotationally symmetrical valve. The rotationally symmetrical valve has the further advantage that the creation of turbulences is prevented due to the symmetrical design so that a perfectly laminar fluid flow may result.

The resultant quasi deterministic dispensing process for dispensing the fluid has the advantage that essentially nothing of the dispensed fluid volume remains on the outside of the sealing lips of the second check valve, flange of the second check valve or other parts of the dispenser. In addition, this has the advantage of increased precision as the entirety of the dispensed fluid volume does in fact reach the receptacle.

Embodiments of the invention are particularly advantageous as any risk of cross-contamination, especially sample-to-sample cross-contamination (also known as sample carry-over), can be avoided as the dispensing of fluid can be performed contactlessly, i.e. without establishing a contact between the outlet of the dispenser and the vessel into which the fluid is dispensed.

In accordance with an embodiment of the invention the second check valve is mounted on the second end of the conduit by a slip-fit. This has the advantage of enabling an efficient assembly while preventing the creation of a dead volume for the dispensed fluid.

In accordance with an embodiment of the invention the second check valve has an inner diameter (d_{T}) below 0,8 mm, in particular below 0,7 mm, in particular below 0,6 mm.

In accordance with an embodiment of the invention the first check valve is mounted within the conduit forming a slip-fit and/or by forming a slip-fit with a connecting piece of a fluid reservoir to which the dispenser is attached.

A 'slip-fit' as understood herein is created by the part that is mounted on another part having a dimension that does not precisely fit or match the other part on which it is mounted resulting in a deformation which is also referred to as 'press-fit'.

In accordance with embodiments of the invention the dispenser including the first and second check valves is a mold part that is produced by multi-component injection molding.

In accordance with another aspect of the invention a cartridge for dispensing fluid is provided. The cartridge has a reservoir for the fluid. The dispenser is attached to a connecting piece of the reservoir.

In accordance with an embodiment of the invention the cartridge has a holder for holding the actor in proximity to the fluid chamber and for guiding the actor towards the chamber when the actor is urged against the chamber by a drive. This has the advantage of integrating the actor into the cartridge.

In accordance with an embodiment of the invention the cartridge is operable to receive an actor from an external device, such as from an analyzer. The external device has a drive for urging the actor against the chamber when the cartridge is in an operating position. This has the advantage of reducing the number of components that are integrated into the cartridge and thus the cost of production of the cartridge.

In accordance with embodiments of the invention the actor has a drive coupler for releasably coupling the actor to the drive. For example, the actor may have the form of a push rod. One end of the push rod is arranged to compress the fluid chamber whereas the other end of the actor carries a ferromagnetic element for coupling the actor to the drive when the cartridge is inserted into an analysis system.

In accordance with an embodiment of the invention a chuck, such as a jawed chuck, a vacuum chuck or a collet, is used for releasably coupling the actor to the drive.

In still another aspect the present invention relates to an analysis system for analyzing a biological sample, such as by means of an immunoassay. For execution of such an analysis one or more reagents are required that need to be mixed with the biological sample in order to perform a reaction that is sensed by the analysis system.

The analysis system has a cartridge holder for holding a plurality of the aforementioned cartridges that can be filled with the various reagents that may be required for the performance of the analysis. The analysis system comprises one or more of the aforementioned cartridges. The analysis system further comprises a receptacle holder for holding a receptacle containing the biological sample and as option one or more of the reagents, such as a sample tube holder or sample tube gripper.

The analysis system further comprises a robotic component for relative movement of the receptacle holder and the cartridge holder, e.g. for moving one of the cartridges that is filling with a required reagent over the receptacle for ejecting a portion of the fluid into the receptacle in order to bring the reagent into contact with the biological sample. In other words, either the receptacle holder is moved or the cartridge holder is moved or both the receptacle holder +and the cartridge holder are moved relative to each other by the robotic component.

The analysis system comprises a drive for driving the actors of the cartridges. When a required cartridge is in a dispensing position, the drive is coupled to the actor for compressing the fluid chamber of that cartridge. A controller of the analysis system serves for controlling the robotic component and the drive the drive for dispensing the one or more reagents from the cartridges into the receptacle for inducing a reaction of the biological sample with the reagents to perform the analysis. Embodiments of the invention are particularly advantageous as the overall cost for the analysis system is minimized while the quality of the analysis is optimized. This is due to the fact that the quantities of the reagents that need to be dispensed for performance of an analysis can be minimized because of the dispenser of the invention.

In particular, this is due to the fact that no decay products of the reagents are present on the dispenser which may otherwise negatively influence the performance of the analysis of the biological sample. As such decay products are essentially absent due to the design of the dispenser the quantities of the dispensed reagents can be minimized. Further, the concentration of the reagent is not changed due to the evaporation of solvent from the fluid volumes remaining from former dispensing steps which enables a higher degree of precision as to the amount and concentration of dispensed reagent.
A typical pipetting station is replaced in the analysis system of the invention by a cartridge holder and a drive that can be implemented by a much simpler mechanical design which requires less maintenance and is far less costly to produce. In particular, this is due to the fact that the complex movement pattern that is executed by a pipetting station may be replaced by a translational motion of the cartridge holder relative to the receptacle holder.

### Brief description of the drawings

In the following embodiments of the invention are described in greater detail by way of example only making reference to the drawings in which:
- Figure 1: is a longitudinal cross-sectional view of an embodiment of a microfluidic dispenser of the invention,
- Figure 2: is a side view of a duckbill valve,
- Figure 3: is a sectional view of the duckbill valve of Fig. 2 taken through plane I-I,
- Figure 4: is a top view of the duckbill valve of Fig. 2,
- Figure 5: is a longitudinal cross-sectional view of another embodiment of the microfluidic dispenser of the invention,
- Figure 6: is illustrative of a first mode of operation of an embodiment of a microfluidic dispenser,
- Figure 7: is illustrative of a second mode of operation of an embodiment of the microfluidic dispenser,
- Figure 8: is a schematic diagram illustrating an embodiment of a cartridge of the invention,
- Figure 9: is a schematic diagram illustrating an embodiment of a cartridge of the invention,
- Figure 10: is a schematic diagram illustrating an embodiment of a cartridge of the invention,
- Figure 11: is a perspective view of an embodiment of a cartridge of the invention,
- Figure 12: is a top view of the docking station of the embodiment of Fig. 11,
- Figure 13: is a block diagram being illustrative of an embodiment of an analysis system of the invention.
- Figure 14: is a diagram illustrating the precision of an embodiment of a dispenser of the invention when water is dispensed,
- Figure 15: is a diagram illustrating the precision of an embodiment of a dispenser of the invention when another fluid is dispensed,
- Figure 16 a: is a longitudinal cross-sectional view of a further embodiment of a microfluidic dispenser of the invention in its normally-closed state,

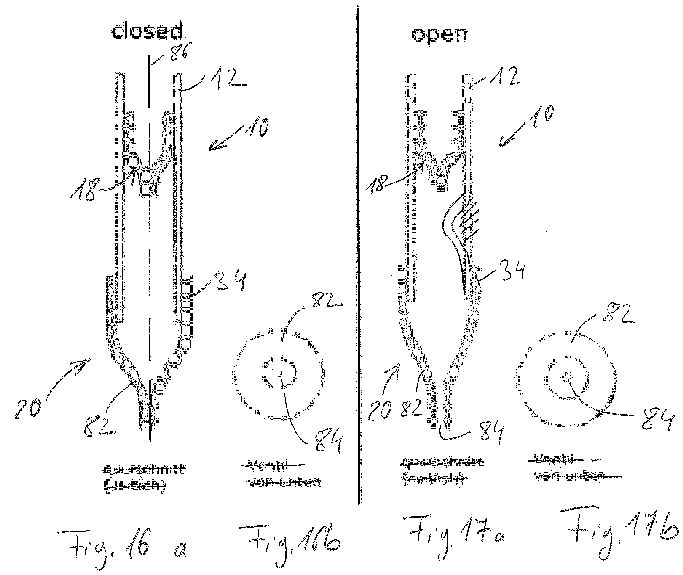

- Figure 16 b: is a bottom view of the symmetrical valve in its normally-closed state,
- Figure 17 a: is a longitudinal cross-sectional view of the further embodiment of Fig. 16 in the open state,
- Figure 17 b: is a bottom view of the symmetrical valve in its open state.

### Detailed description

Throughout the description of the following embodiments of the invention identical or like elements are designated by identical reference numerals.

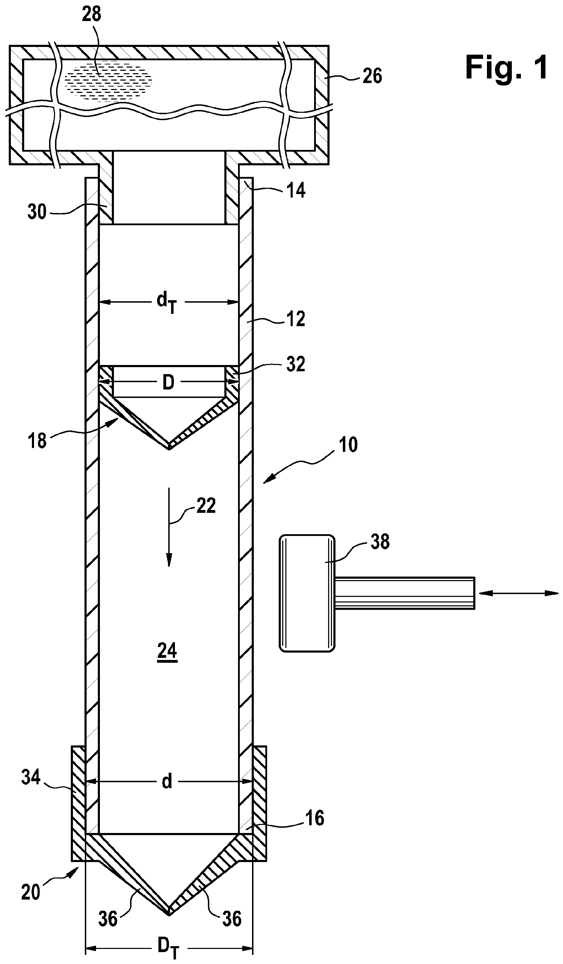

Fig. 1 shows a microfluidic dispenser 10. The microfluidic dispenser 10 has a compressible elastomeric fluid conduit, such as a tube 12. The tube 12 is formed by an elastomer, such as silicone rubber (VMQ, Methyl-Vinyl-Silicone-Rubber).

The tube 12 has an upper end 14 and a lower end 16. A first check valve 18 is mounted in the tube 12 above a second check valve 20. Hence, the check valves 18 and 20 are distanced within the tube 12 in the direction 22 of the fluid flow. A fluid chamber 24 is formed by the check valves 18, 20 and the portion of the tube 12 that extends between the check valve 18 and the check valve 20.

The microfluidic dispenser 10 is in a fluid connection with a fluid reservoir 26 that contains a fluid 28, such as a reagent. The fluid reservoir 26 has a connecting portion 30 for connecting the microfluidic dispenser 10 to the fluid reservoir 26.

For example, the check valve 18 may be fixed inside the tube 12 by a slip-fit. The check valve 18 may have a flange 32 that has an outer diameter D that is slightly larger than the inner diameter d_{T} of the tube 12. Hence the check valve 18 is slightly deformed in its mounting position fixing the check valve 18 to the interior surface of the tube 12 thus creating the slip-fit.

The check valve 20 may be attached to the tube 12 in the same way as the check valve 18. Alternatively and as shown in Fig. 1, the check valve 20 has a flange 34 having an inner diameter d that is slightly smaller than the outer diameter D_{T} of the tube 12 such that a slip-fit is created at the outer surface of the tube 20.

The check valve 20 is a duckbill valve. The check valve 20 is mounted on the lower end 16 of the tube 12. Its elastomeric lips 36 extend beyond the lower end 16 of the tube 12 as depicted in Fig. 1.

The check valve 20 is a passive unidirectional normally closed duckbill valve. The check valve 20 comprises a cylindrical body member 52 provided with a fluid passageway 54. The body member 52 smoothly tapers from an inlet end 56 to form a wedge-shaped outlet end 58 having an outlet slit 59 defining the pair of resilient elastomeric sealing lips 36.

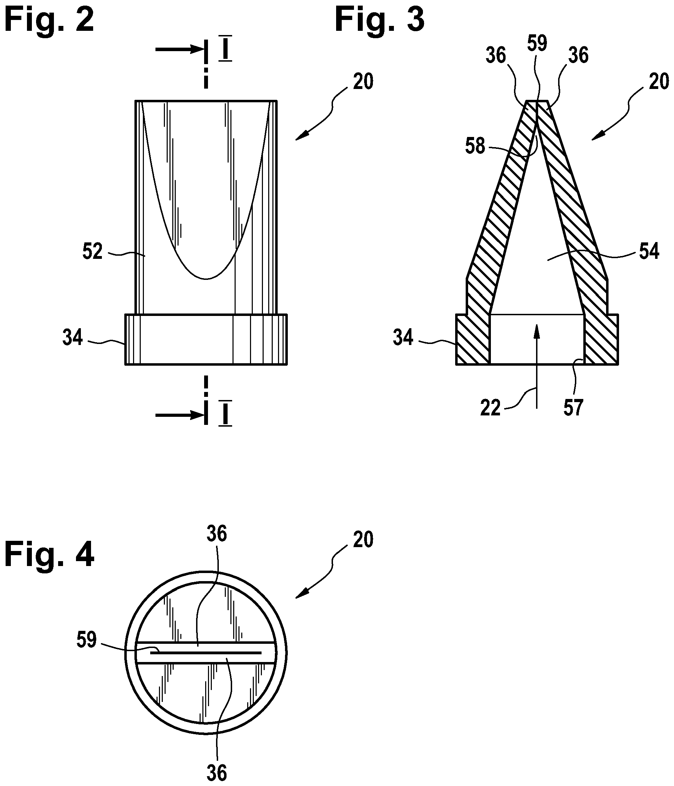

Body member 52 is formed of a resilient elastomeric material which is molded into the configuration shown in Figs. 2 to 4. The check valve 20 is sealingly positioned in line with the tube 12 as shown in Fig. 1. A flow of the fluid 28 is directed along the tube 12 into the direction 22 along axial passage 54 to outlet end 58 where the pressure exerted by the fluid flow between the adjacent sealing lips deforms lips 36 away from one another to open outlet slit 59 of the check valve 20 to permit fluid flow therethrough.

If fluid flow stops or reverses direction, the resilient lips 36 resume their normal shape into sealing arrangement against one another, closing the outlet slit 59.

The check valve 18 may be of similar or identical design as check valve 20, i.e. check valve 18 may also be a duckbill valve.

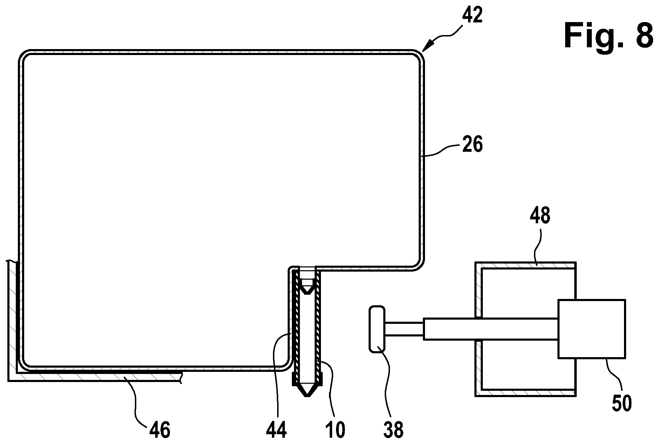

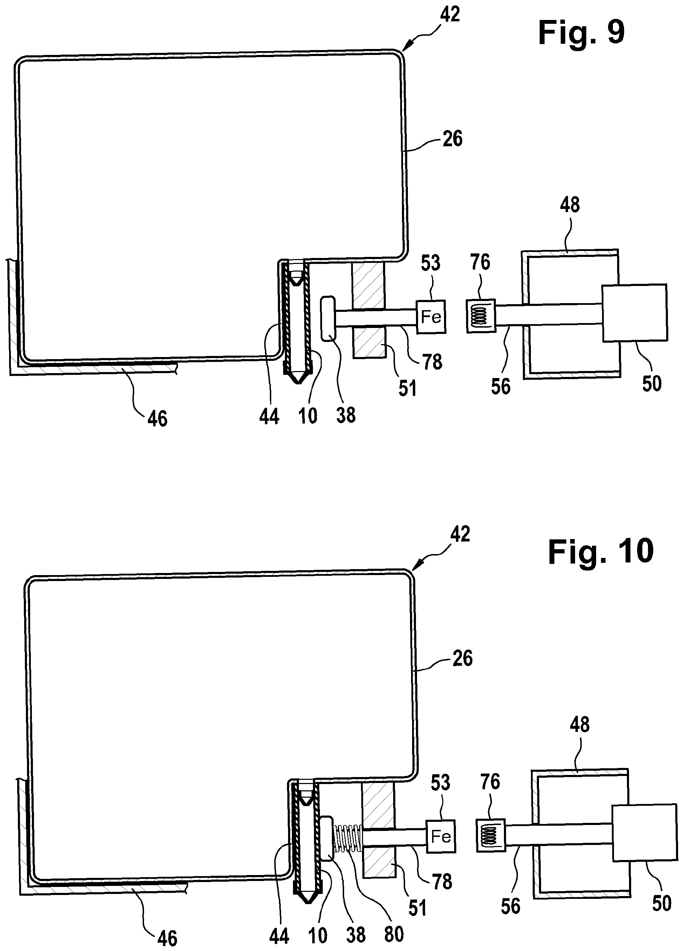

Actor 38 is positioned in proximity to the fluid chamber 24. The actor may be formed as push rod that is coupled to a drive (cf. drive 50 of Fig. 8 or 9) for controllably urging the actor 38 against the fluid chamber 24 such that the fluid chamber 24 is compressed.

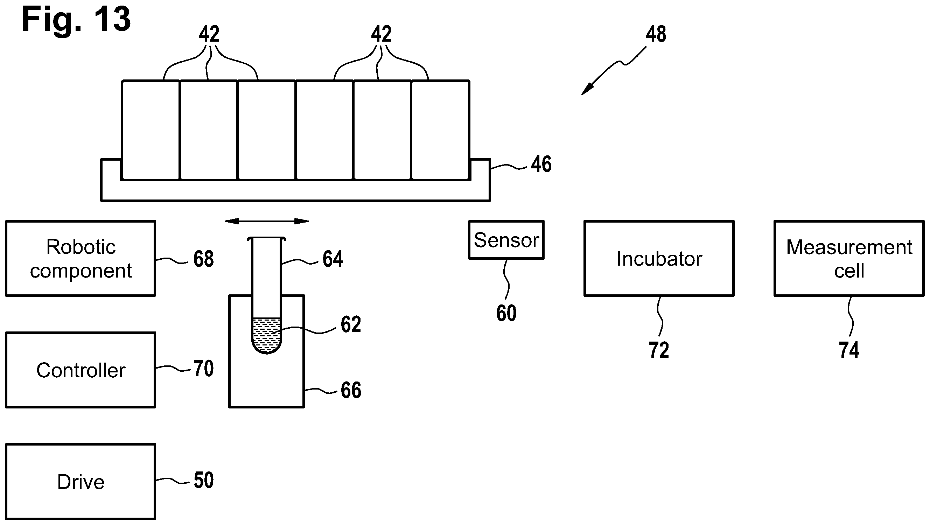

The lips 36 of the check valve 20 form a sealing surface 82 that also serves for evaporation protection of the fluid contained in the fluid chamber 24. The sealing surface 82 forms part of the outer surface of the dispenser 10 such that the fluid is dispensed from the fluid chamber 24 through the check valve 20 directly into a receptacle, such as a sample tube 64 (cf. Fig. 13) without contacting any intermediary component of the dispenser 10. This increases the precision with which the fluid is dispensed and also prevents the adhesion of fluid residuals on any intermediary component.

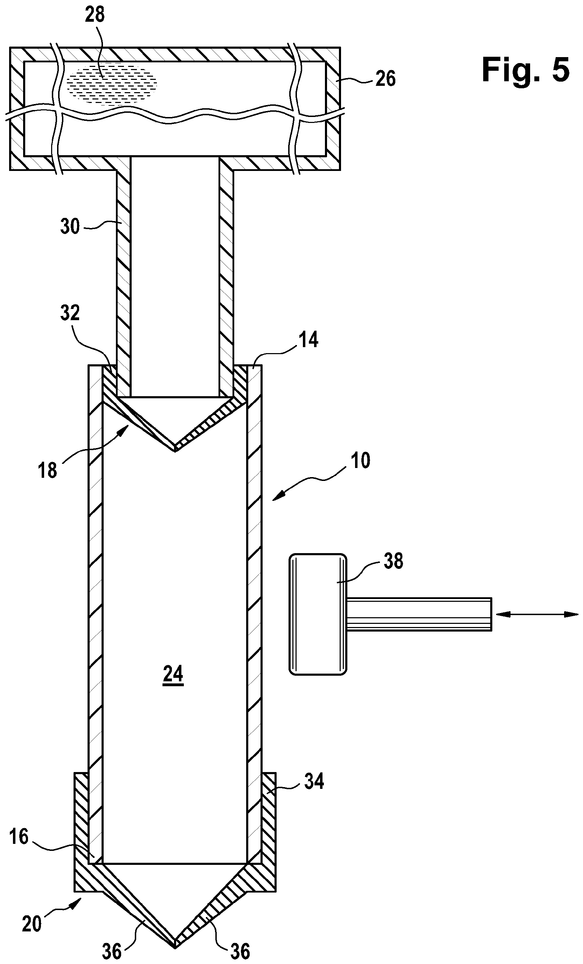

Fig. 5 shows an alternative embodiment of the microfluidic dispenser 10. In the embodiment considered here the connecting portion 30 of the fluid reservoir 26 forms a slip-fit with the inner side of the flange 32 of check valve 18. For mounting the microfluidic dispenser 10 on the connecting portion 30 the following steps may be performed:
- check valve 18 is moved over the outlet opening formed by the connecting portion 30 to form a slip-fit between the inner side of the flange 32 and the outer side of the connecting portion 30;
- the upper end 14 of the tube 12 is moved over the outside of flange 32 to form a slip-fit; and
- the check valve 20 is moved over the lower end 16 of the tube 12 which results in the arrangement as shown in Fig. 5.

Alternatively the check valve 20 is preassembled on the tube 12 such that the tube 12 with the already mounted check valve 18 is moved over the flange 32 of check valve 18.

Alternatively the microfluidic dispenser 10 is integrally formed as a mold part such as by multi-component injection molding.

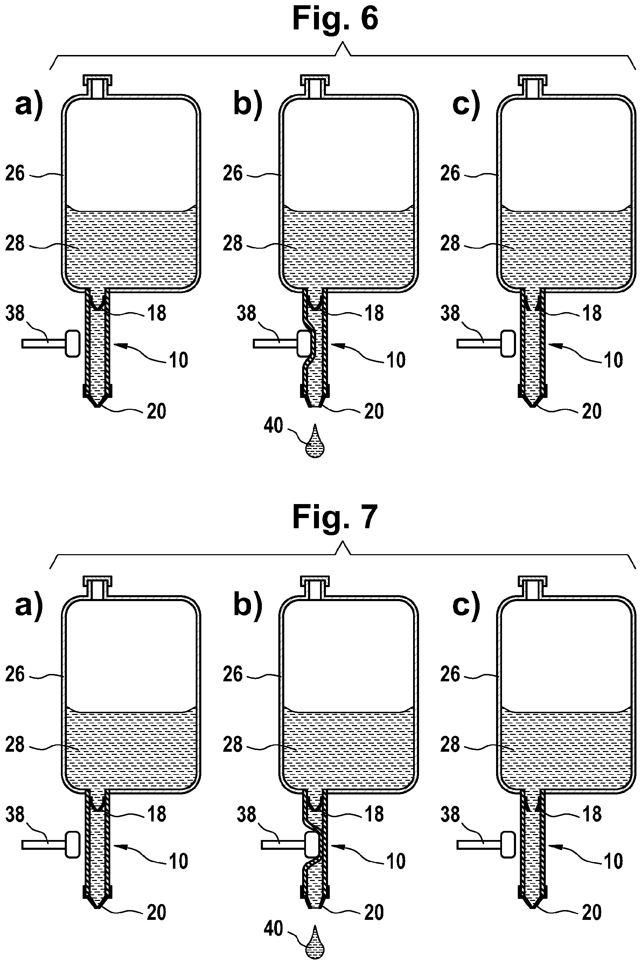

Fig. 6 illustrates a first mode of operation of the microfluidic dispenser 10. Fig. 6a shows the microfluidic dispenser 10 when the actor 38 is in its rest position. The fluid chamber 24 is filled with a portion of the fluid 28. Both check valves 18 and 20 are closed.

For dispensing a portion of the fluid 28 the actor 38 is moved by the drive into the direction of the tube 12 such that the fluid chamber 24 of the tube 12 is compressed as shown in Fig. 6b. The compression of the fluid chamber 24 causes the check valve 20 to open such that the sealing lips 36 are deformed for opening outlet slit 59. The opened sealing lips 36 serve as nozzle for releasing a portion of the fluid 28, such as a droplet 40. As the sealing lips extend beyond the lower end 16 of the tube 12 there is no risk that a portion of the droplet 40 would adhere to some portion of the microfluidic dispenser 10.

In the embodiment considered here the actor 38 is displaced by a predefined distance such that only a relatively small portion of the fluid contained in the fluid chamber 24 is dispensed.

Next, the actor 38 is moved back to its rest position. This causes the check valve 20 to close cutting off the fluid flow. The check valve 18 is opened as the fluid pressure within the fluid chamber 24 is below the fluid pressure in the fluid reservoir 26 due to the fact that a portion of the fluid has been dispensed from the fluid chamber 22. As a consequence the fluid chamber 24 is refilled by a portion of the fluid 28 flowing from the fluid reservoir 26 into the fluid chamber 24.

For the embodiment considered with respect to Fig. 6 a piezoelectric drive may be utilized for driving the actor 38 as the actor 38 needs to be displaced for a small predefined distance. If a larger volume of fluid needs to be dispensed the sequence shown in Figs. 6a-c needs to be carried out multiple times.

Fig. 7 illustrates a second mode of operation of the microfluidic dispenser 10. In the embodiment considered here a larger volume of fluid is dispensed in one cycle due to a larger displacement of the actor 38.

Figs. 7a and 7c are equivalent to Figs. 6a and 6c except that the amount of fluid flowing through the check valve 18 for refilling the fluid chamber 24 is larger in Fig. 7c than it is in Fig. 6c.

As shown in Fig. 7b the degree of compression of the fluid chamber 24 is greater than that of Fig. 6b due to a larger displacement of the actor 38 resulting in a larger portion of the fluid 28 contained in the fluid chamber 24 being dispensed in one cycle. In the embodiment considered here a linear motor may be used for driving the actor 38 enabling a larger range of fluid volumes that may be dispensed by the fluid dispenser 10 in one cycle.

Fig. 8 shows an embodiment of a cartridge 42 that contains the reservoir 26 and the microfluidic dispenser 10. The cartridge 42 has a wall portion 44. The fluid chamber 24 extends along the wall portion 44 such that the wall portion 44 forms a counter-bearing when the actor 38 is urged against the fluid chamber 24 as shown in Figs. 6b and 7b. The cartridge 42 is inserted into a holder 46 of an analyzer 48. The analyzer 48 has a drive 50, such as a piezoelectric drive or a linear motor for driving the actor 38.

Fig. 9 shows an alternative embodiment where the actor 38 forms part of the cartridge 42. The cartridge has a holder 51 for holding the actor 38 in its rest position in proximity to the fluid chamber 24. The actor 38 is connected to a drive coupler 53 that serves for coupling the actor 38 to drive 50. For example, the drive coupler 53 is a ferromagnetic element.

The drive 50 is connected to a rod 56; an electromagnet 76 is mounted on the end of the rod 56. When the electromagnet 76 is excited by the analyzer 48 the ferromagnetic element of the drive coupler 53 is attracted by the electromagnet 76 such that the actor 38 is coupled to rod 56. The drive 50 may be controlled by the analyzer 48 to urge the actor 38 against the fluid reservoir 26 by a predefined distance or by a selectable distance depending on the implementation.

Fig. 10 shows another embodiment where the actor 38 forms part of the cartridge 42. As in the embodiment of Fig. 9, the holder 51 holds a shaft 78 that extends through the holder 51. The actor 38 is formed on one end of the shaft 78 that is located opposite to the wall portion 44. The drive coupler 53 is formed on the other end of the shaft 78.

A biasing element 80, such as a cylindrical spring as shown in the embodiment of Fig. 10, exercises a biasing force onto the actor 38 towards the flow chamber 24 (cf. Fig. 1) in order to preposition the actor relative to the fluid chamber that is located between the wall portion 44 and the actor 38. For example, the biasing element 80 extends between the actor 38 and the holder 51 in order to slightly press the actor 38 against the flow chamber 24 to keep the actor 38 in a defined position in close proximity to the flow chamber. This is particularly advantageous if the drive 50 is a piezoelectric drive as a piezoelectric drive can move the shaft 78 only by very small increments.

In the embodiments shown in Figs. 9 and 10, the rod 56 and the mounted electromagnet 76 is still in a position away of the drive couple 53. In this configuration, the drive 50 has to move the rod 56 and the mounted electromagnet 76 first into the direction to the drive couple 53 to bring the electromagnet 76 and the drive couple 53 into a smaller distance. Thereafter the electromagnet 76 can be excited to attract the ferromagnetic element of the drive coupler 53 by the electromagnet 76 such that the actor 38 is coupled to rod 56.

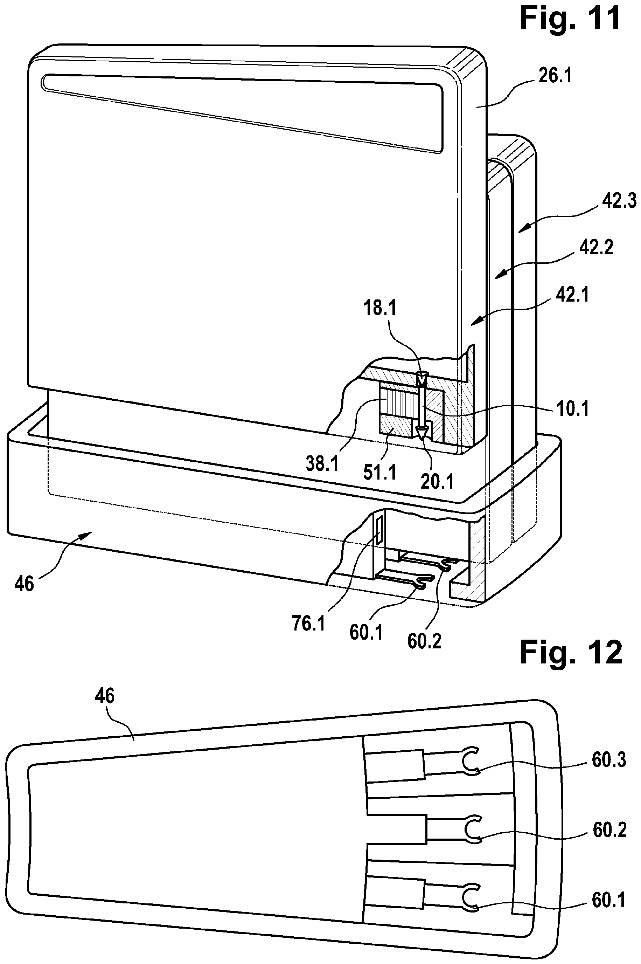

Fig. 11 shows an embodiment of a cartridge. In the embodiment considered here the holder 46 is implemented as a docking station of the analyzer 48 for receiving three cartridges 42.1, 42.2 and 42.3. The cartridge 42.1 comprises a fluid reservoir 26.1 and the microfluidic dispenser 10.1 in accordance with the embodiment of Fig. 9 thus including the actor 38.1. In contrast, the drive with the ferromagnetic element 76.1 forms part of the docking station and thus the analyzer 48. The other cartridges 42.2 and 42.3 are of identical mechanical design but may contain other reagents. For example, each of the cartridges 42.1, 42.2 and 42.3 contains one reagent of an immuno assay, such as an ECL (electrochemoluminescence) assay.

Fig. 11 shows the cartridge 42.1 before insertion into the holder 46 that is adapted to receive all three cartridges 42.1, 42.2 and 42.3. The cartridges 42.2 and 42.3 have already been inserted into the holder 46.

Each of the cartridges 42.1, 42.2 and 42.3 is a disposable whereas the docking station, i.e. the holder 46, forms part of the analyzer 48 that also includes the drive 50. In addition, the docking station may include a sensor 60 for each of the cartridges for sensing the amount of fluid dispensed from the respective microfluidic dispenser 10 and such that the analyzer 48 may correspondingly control the drive 50 for dispensing of a desired volume of the fluid 28 from the respective cartridge.

The cartridges 42.1, 42.2 and 42.3 may be implemented as separate physical components as shown in Fig. 11. Alternatively these cartridges can be integrally formed such as by a single injection molded part that unifies the three cartridges of the immunoassay into a single physical component.

For clinical tests typically two different reagents are required. In accordance with an embodiment of the invention two of the cartridges, such as cartridges 42.1 and 42.2, are integrally formed to form a single physical unit. The fluid reservoir 26.1 contains one of the reagents whereas the fluid reservoir 26.2 contains the other reagent that is required for performing the clinical test.

Fig. 12 shows a top view of the holder 46 after the cartridges 42.1, 42.2 and 42.3 have been removed.

Fig. 13 shows a highly schematic block diagram of analyzer 48. Analyzer 48 has a holder 46, such as a docking station (cf. Fig. 10) for receiving multiple disposable cartridges 42. Each one of the cartridges 42 may be filled with one of the reagents that are required for analyzing a biological sample, such as a reagent of an immunoassay. Alternatively, at least one of the cartridges 42 comprises multiple cartridges, such as cartridges 42.1, 42.2 and 43.3, that are integrally formed as a single physical unit.

The biological sample 62 to be analyzed is contained in a sample tube 64 that is held by a tube gripper 66 of the analyzer 48.

The analyzer 48 has a robotic component 68 for a relative movement of the holder 46 and thus the cartridges 42 and the tube gripper 66 for positioning the sample tube 64 underneath one of the cartridges 42 from which a portion of a reagent needs to be dispensed into the sample tube 64. The analyzer 48 has a controller 70 for controlling overall system operation, such as a computer. Further, the analyzer 48 may comprise an incubator 72, and a measurement cell 74 as well as other components depending on the type of the analysis to be performed.

In operation, the controller 70 controls the robotic component to position the tube gripper 66 with the sample tube 64 underneath one of the dispensers of one of the cartridges 42 that contains a reagent that needs to be dispensed into the sample tube 64. When the sample tube 64 has been positioned under the required dispenser the controller 70 controls the drive 50 to push the actor 38 against the fluid chamber 24 of that dispenser such that a portion of the reagent is dispensed. This may be repeated several times until the required mixture of reagents is present in the sample tube 64.

Next, the sample tube 64 may be moved to the incubator 72 for incubation of the mixture. After incubation the controller 70 controls the measurement cell 74 to perform a measurement for analyzing at least one property of the sample 62. The controller 70 outputs this result via a machine or user interface.

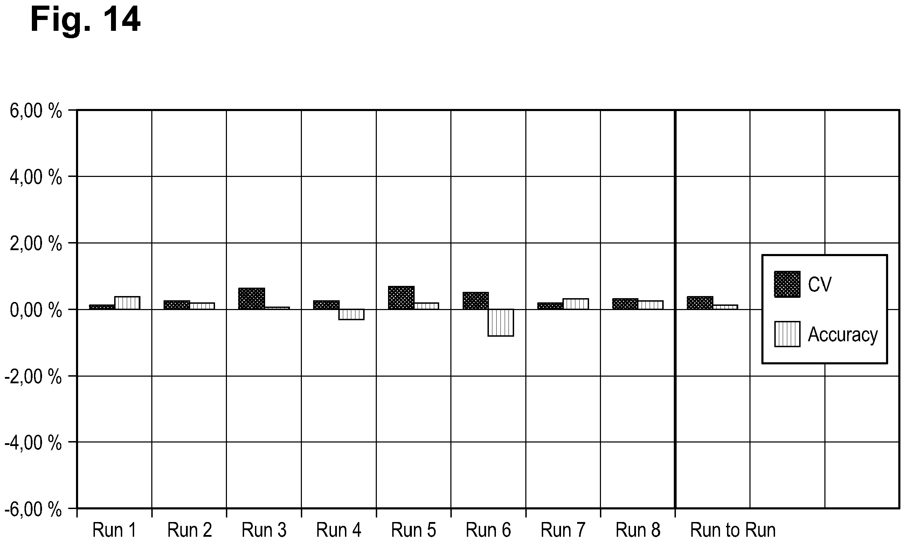

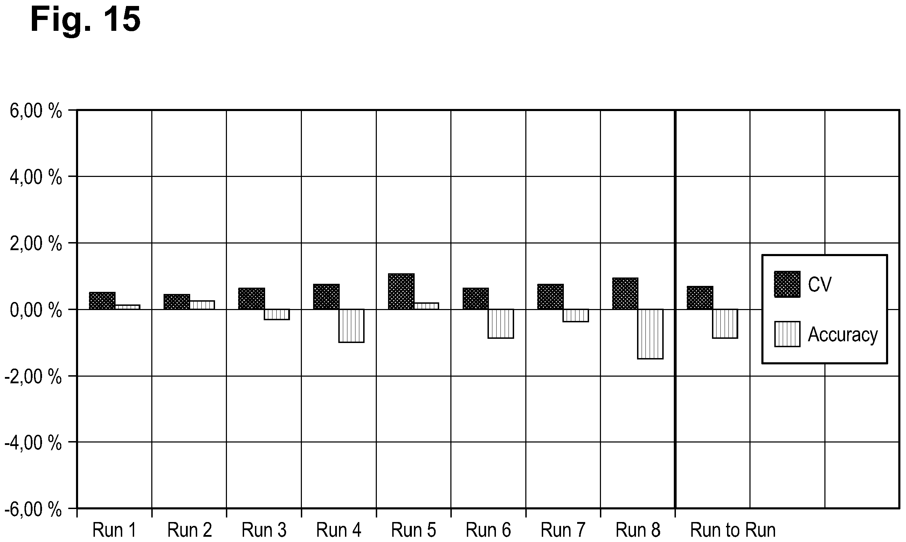

Figs. 14 and 15 are diagrams illustrating the precision with which various types of fluids can be dispensed using an embodiment of the microfluidic dispenser. Fig. 14 illustrates experimental results obtained by dispensing water. The viscosity of water is about 1.0 mPas at 20°C and about 0.8 mPas at 25°C. The target volume of water to be dispensed in each one of the dispensing steps is 1 µl. A run of dispensing steps comprises 27 subsequent dispensing steps each with a target volume of 1 µl. 8 runs of 27 dispensing steps of 1 µl each has been performed as Run 1 to Run 8. Fig. 14 shows the CV (coefficient of variation) and the accuracy for each of the runs and also run to run.

Fig. 15 shows the same diagram for another fluid having a higher viscosity of 17 mPas for which a similar precision is obtained.

Fig. 16a shows an embodiment of the microfluidic dispenser 10 wherein the check valve 20 is rotationally symmetric around the longitudinal axis 86 that extends along the tube 12. The symmetrical check valve 20 is formed of an elastic material that has an elastic pre-tension to keep the circular outlet 84 of the check valve 20 normally-closed as shown in Figs. 16a and 16b. The valve body of the second check valve 20 constitutes a sealing surface 82 that forms part of the outer surface of the dispenser 10 such that the fluid is dispensed directly from the second check valve into a receptacle, such as a sample tube 64 (cf. Fig. 13) without any intermediary components.

Figs. 17a and 17b show the dispenser 10 in its open state when the actor 38 (cf. Fig. 1, 5, 6, 7, 8, 9, 10, 11) exercises a mechanical force onto the tube 12 such that the tube is compressed and the symmetrical check valve 20 is opened due to the increased fluid pressure. Due to the opening pressure the circular outlet 84 is opened by elastic deformation of the symmetrical valve body against its elastic pre-tension.

**List of Reference Numerals**

| | |
|---|---|
| microfluidic dispenser | 10 |
| tube | 12 |
| upper end | 14 |
| lower end | 16 |
| check valve | 18 |
| check valve | 20 |
| direction | 22 |
| flow chamber | 24 |
| fluid reservoir | 26 |
| fluid | 28 |
| connecting portion | 30 |
| flange | 32 |
| flange | 34 |
| lip | 36 |
| actor | 38 |
| droplet | 40 |
| cartridge | 42 |
| wall portion | 44 |
| holder | 46 |
| analyzer | 48 |
| drive | 50 |
| holder | 51 |
| body member | 52 |
| drive coupler | 53 |
| fluid passageway | 54 |
| rod | 56 |
| outlet end | 58 |
| outlet slit | 59 |
| sensor | 60 |
| sample | 62 |
| sample tube | 64 |
| tube gripper | 66 |
| robotic component | 68 |
| controller | 70 |
| incubator | 72 |
| measurement cell | 74 |
| electromagnet | 76 |
| shaft | 78 |
| biasing element | 80 |
| sealing surface | 82 |
| outlet | 84 |
| longitudinal axis | 86 |

## Claims

1. A cartridge (42) for dispending a fluid (28) comprising
- a reservoir (26) for the fluid,
- a dispenser (10) for dispensing the fluid (28) comprising a compressible elastomeric fluid conduit (12) having a first end (14) and a second end (16) for flowing the fluid from the first end to the second end, a first check valve (18) and a second check valve (20) being distanced in the conduit for forming a fluid chamber (24), wherein at least the second check valve is a duckbill valve or a rotationally symmetrical valve having a circular fluid outlet, the dispenser having its first end (14) connected to the reservoir for enabling an inflow of the fluid from the reservoir into the fluid chamber (24) through the first check valve (18), the cartridge having a wall portion (44),
**characterized in that**
the second check valve is located at the second end (16) of the conduit (12), the second check valve (20) having sealing lips (36) that extend beyond the second end (16) of the conduit (12),
the fluid chamber (24) extends along the wall portion (44),
the cartridge (42) comprises an actor (38) configured to dispense a portion of the fluid by compressing the fluid chamber (24) by pressing the fluid chamber (24) against the wall portion (44).

2. The cartridge of claim 1, further comprising a biasing element (80) for exercising a biasing force onto the actor in order to preposition the actor relative to the fluid chamber

3. The cartridge of claim 1 or 2, further comprising a holder (51) for holding the actor in proximity to the fluid chamber and for guiding the actor towards the fluid chamber when the actor is urged against the fluid chamber by a drive (50).

4. The cartridge of claim 3, the actor having a drive coupler (53) for releasably coupling the actor to the drive.

5. The cartridge of claim 4, the drive coupler having a ferromagnetic element, a chuck, such as a jawed chuck, a vacuum chuck or a collet, for releasably coupling the actor to the drive.

6. The cartridge of any one of claims 1 to 5, the reservoir containing a reagent.

7. An analysis system for analyzing a biological sample (62) comprising
- a cartridge holder (51) for holding a plurality of the cartridges (42) of any of the claims 1 to 6,
- the cartridge (42) of any of the claims 1 to 6,
- a receptacle holder (66) for holding a receptacle (64) containing the biological sample,
- a robotic component (68) for relative movement of the cartridge holder and the receptacle,
- a drive (50) for driving the actors (38) of the cartridges,
- a controller (70) for controlling the robotic component and the drive for dispensing the one or more reagents from the cartridges into the receptacle for inducing a reaction of the biological sample with the reagents to perform the analysis.

8. The analysis system of claim 7 further comprising a sensor (60) for sensing the volume of a fluid dispensed from one of the cartridges and for generating a sensor signal being indicative of the volume, wherein the controller is adapted to receive the sensor signal and to control the drive for dispensing a predetermined volume of the reagent from the one of the cartridges.

## Patentansprüche

1. Kartusche (42) zum Abgeben eines Fluids (28), umfassend
- ein Reservoir (26) für das Fluid,
- einen Probengeber (10) zum Abgeben des Fluids (28), umfassend einen komprimierbaren elastomeren Fluidkanal (12) mit einem ersten Ende (14) und einem zweiten Ende (16) zum Strömen des Fluids vom ersten Ende zum zweiten Ende, ein erstes Sperrventil (18) und ein zweites Sperrventil (20), die in dem Kanal voneinander beabstandet sind, damit eine Fluidkammer (24) ausgebildet wird, wobei wenigstens das zweite Sperrventil ein Lippenrückschlagventil oder ein rotationssymmetrisches Ventil mit einem kreisförmigen Fluidauslass ist, das erste Ende (14) des Probengebers mit dem Reservoir verbunden ist, um ein Einfließen des Fluids aus dem Reservoir durch das erste Sperrventil (18) in die Fluidkammer (24) zu ermöglichen, wobei die Kartusche einen Wandabschnitt (44) aufweist,
**dadurch gekennzeichnet, dass**
das zweite Sperrventil am zweiten Ende (16) des Kanals (12) angeordnet ist, wobei das zweite Sperrventil (20) Sperrlippen (36) aufweist, die sich über das zweite Ende (16) des Kanals (12) hinaus erstrecken,
sich die Fluidkammer (24) entlang des Wandabschnitts (44) erstreckt,
die Kartusche (42) einen Aktor (38) umfasst, der dazu ausgelegt ist, einen Teil des Fluids durch Komprimieren der Fluidkammer (24) abzugeben, indem die Fluidkammer (24) gegen den Wandabschnitt (44) gedrückt wird.

2. Kartusche nach Anspruch 1, ferner umfassend ein Vorspannelement (80) zum Ausüben einer Vorspannkraft auf den Aktor, um den Aktor relativ zu der Fluidkammer in Position zu bringen.

3. Kartusche nach Anspruch 1 oder 2, ferner umfassend eine Haltevorrichtung (51) zum Halten des Aktors in der Nähe der Fluidkammer und zum Führen des Aktors zu der Fluidkammer, wenn der Aktor durch eine Antriebsmechanik (50) gegen die Fluidkammer gedrängt wird.

4. Kartusche nach Anspruch 3, wobei der Aktor einen Antriebskoppler (53) zum lösbaren Koppeln des Aktors mit der Antriebsmechanik aufweist.

5. Kartusche nach Anspruch 4, wobei der Antriebskoppler ein ferromagnetisches Element, ein Spannfutter, wie etwa ein Backenfutter, ein Saugluftspannfuter oder ein Zangenfutter, zum lösbaren Koppeln des Aktors mit der Antriebsmechanik aufweist.

6. Kartusche nach einem der Ansprüche 1 bis 5, wobei das Reservoir ein Reagens enthält.

7. Analysesystem zum Analysieren einer biologischen Probe (62), umfassend
- eine Kartuschenhaltevorrichtung (51) zum Halten einer Vielzahl der Kartuschen (42) nach einem der Ansprüche 1 bis 6,
- die Kartusche (42) nach einem der Ansprüche 1 bis 6,
- einen Aufnahmebehälter (66) zum Halten einer Aufnahme (64), welche die biologische Probe enthält,
- eine Automatikkomponente (68) für relative Bewegungen der Kartuschenhaltevorrichtung und der Aufnahme,
- eine Antriebsmechanik (50) zum Antreiben der Aktoren (38) der Kartuschen,
- eine Steuereinrichtung (70) zum Steuern der Automatikkomponente und der Antriebsmechanik zum Abgeben des einen oder der mehreren Reagentien aus den Kartuschen in die Aufnahme zum Induzieren einer Reaktion der biologischen Probe mit den Reagentien, um die Analyse durchzuführen.

8. Analysesystem nach Anspruch 7, ferner umfassend einen Sensor (60) zum Erfassen des Volumens des aus einer der Kartuschen abgegebenen Fluids und zum Erzeugen eines Sensorsignals, welches auf das Volumen hinweist, wobei die Steuereinrichtung dazu ausgelegt ist, das Sensorsignal zu empfangen und die Antriebsmechanik zum Abgeben eines vorgegebenen Volumens des Reagens aus der einen oder den mehreren Kartuschen zu steuern.

## Revendications

1. Cartouche (42) pour distribuer un fluide (28) comprenant
- un réservoir (26) pour le fluide,
- un distributeur (10) pour distribuer le fluide (28) comprenant un conduit de fluide élastomère compressible (12) ayant une première extrémité (14) et une seconde extrémité (16) pour faire s'écouler le fluide de la première extrémité jusqu'à la seconde extrémité, un premier clapet de non-retour (18) et un second clapet de non-retour (20), qui sont à une certaine distance dans le conduit pour former une chambre de fluide (24), dans lequel au moins le second clapet de non-retour est un clapet à bec de canard ou un clapet symétrique en rotation ayant une sortie de fluide circulaire, le distributeur ayant sa première extrémité (14) raccordée au réservoir pour permettre une entrée du fluide du réservoir dans la chambre de fluide (24) par le premier clapet anti-retour (18), la cartouche ayant une partie paroi (44)
**caractérisé en ce que**
le second clapet de non-retour est disposé au niveau de la seconde extrémité (16) du conduit (12), le second clapet de non-retour (20) a des lèvres d'étanchéité (36) qui s'étendent au-delà de la seconde extrémité (16) du conduit (12),
la chambre de fluide (24) s'étend le long de la partie paroi (44),
la cartouche (42) comprend un actionneur (38) configuré pour distribuer une partie du fluide par compression de la chambre de fluide (24) en pressant la chambre de fluide (24) contre la partie paroi (44).

2. Cartouche selon la revendication 1, comprenant en outre un élément de sollicitation (80) pour exercer une force de sollicitation sur l'actionneur de manière à pré-positionner l'actionneur relativement à la chambre de fluide.

3. Cartouche selon la revendication 1 ou 2, comprenant en outre un support (51) pour supporter l'actionneur à proximité de la chambre de fluide et pour guider l'actionneur en direction de la chambre de fluide lorsque l'actionneur est poussé contre la chambre de fluide par un dispositif d'entraînement (50).

4. Cartouche selon la revendication 3, l'actionneur ayant un coupleur de dispositif d'entraînement (53) pour coupler de manière libérable l'actionneur au dispositif d'entraînement.

5. Cartouche selon la revendication 4, le coupleur de dispositif d'entraînement ayant un élément ferromagnétique tel qu'un mandrin, un mandrin à mâchoires, un plateau de maintien à vide ou une pince, pour coupler de manière amovible l'actionneur au dispositif d'entraînement.

6. Cartouche selon l'une quelconque des revendications 1 à 5, le réservoir contenant un réactif.

7. Système d'analyse pour analyser un échantillon biologique (62) comprenant
- un support de cartouches (51) pour supporter une pluralité des cartouches (42) selon l'une quelconque des revendications 1 à 6,
- la cartouche (42) selon l'une quelconque des revendications 1 à 6,
- un support de réceptacle (66) pour supporter un réceptacle (64) contenant l'échantillon biologique,
- un composant robotique (68) pour le mouvement relatif du support de cartouche et du réceptacle,
- un dispositif d'entraînement (50) pour entraîner les actionneurs (38) des cartouches,
- un dispositif de commande (70) pour commander au composant robotique et au dispositif d'entraînement de distribuer les un ou plusieurs réactifs des cartouches dans le réceptacle pour induire une réaction de l'échantillon biologique avec les réactifs pour réaliser l'analyse.

8. Système d'analyse selon la revendication 7 comprenant en outre un capteur (60) pour détecter le volume d'un fluide distribué de l'une des cartouches et pour générer un signal de capteur indiquant le volume, dans lequel le dispositif de commande est adapté à recevoir le signal de capteur et à commander au dispositif d'entraînement de distribuer un volume prédéterminé du réactif de l'une des cartouches.
